# EUROPEAN PATENT APPLICATION

(11) **EP 2 056 425 A1**
(43) Date of publication of application: **06.05.2009**
(21) Application number: 07119421.1
(22) Date of filing: 26.10.2007
(51) Int. Cl.: H02J 13/00, H04B 3/52, H04W 72/02

(54) **System and method for transmitting data of different priorities through a hollow transmission device**

(71) Applicant: ABB Research Ltd., 8050 Zürich (CH)
(72) Inventor: Deck, Bernhard, 798 09, Weilheim (DE); Landernäs, Krister, 722 16, Västerås (SE); Kjellsson, Jimmy, 723 44, Västerås (SE); Ebbinghaus, Werner D, 457 31, Waltrop (DE)
(74) Representative: Reyier, Ann-Mari

(57) **Abstract**

The present invention relates to a system for communication between at least two components (1a-d,10), wherein the system comprises: a first component provided with a communication unit configured to generate radio communication signals carrying information, a second component configured to receive the radio communication signals, and a hollow transmission device (5), which is shaped to allow wireless transmission of said radio communication signals between the first and second components. The first component is configured to set priorities of at least two levels to the information to be carried by the radio communication signals. The communication unit is configured to generate radio communication signals on at least two separate radio channels (CH1,CH2,CH3) and to select which radio channel to be used in dependence on the priority level of the information to be carried by the signal. The second component is configured to receive the radio communication signals on at least two separate radio channels and to prioritize the handling of the information based on which channel the information was received on.

## Description

### FIELD OF THE INVENTION

The present invention relates to a system for communication between at least two components, wherein the system comprises a first component provided with a communication unit configured to generate radio communication signals carrying information, a second component configured to receive the radio communication signal, and a hollow transmission device, which is shaped to allow wireless transmitting of said radio communication signals between the first and second components.

The invention also relates to a substation comprising a communication system for communication between various types of components.

The invention also relates to a method for communication between at least two components, wherein the components communicate with each other by means of radio communication signals carrying information sent via a hollow transmission device.

The components are, for example, electric and/or electronic devices, such as electrical switchboards, circuit breakers, and intelligent electronic devices, and various types of measuring devices and sensors, e.g. for diagnostic, protection, monitoring and controlling purposes.

The invention can be used for improving the communication between components in many types of environments containing excessive noise influence, which can interfere with and distort the communication, such as in an electrical substation.

### PRIOR ART

The main function of an electrical substation is to distribute and transform electrical power. For instance, one basic task is to switch down the voltage of distributed power to suitable levels which are useful for a wide range of users, such as utilities companies and various types of plants, etc.

For controlling and monitoring purposes, various types of data from component within the substation need to be communicated internally or externally. However, substations have an internal environment with excessive noise influence, such as electromagnetic noise generated by various sources, placing special demand on reliable transfer of the data without interference. Currently, communication within substations is mainly realized using optical fiber, which in turn is related to high costs. Alternatively, the transferring of data can be realized using wireless communication in a so-called waveguide that creates a controlled RF (Radio Frequency) environment without external interferences. A waveguide is a structure arranged to guide waves, for example radio waves, between different physical locations. A waveguide, besides guiding the waves, also shields radio waves from interference and electromagnetic noise. A waveguide comprises an enclosure usually having a parallelepiped structure.

An arrangement with a waveguide adapted for wireless communication in an electrical switchboard is presented in EP1701420, where the waveguide comprising an anti-interference shielding layer opposes signal interferences and disturbances, which could affect the quality and reliability of the signals during transmissions.

Further, in EP1239600 radio communication of control signals within a substation is performed utilizing a waveguide to transmit and shield signals from interference and noise.

However, when the communication-load becomes heavy in a wireless communication system transmitted through the waveguide, the performance of the data communication is degraded, resulting in an increase in latency and jitter. Under such condition, it is possible that important data for the performance and operation of the substations are not transmitted within necessary time.

### OBJECTS AND SUMMARY OF THE INVENTION

The object of the present invention is to provide an attractive solution, which alleviates the problems above and thus accomplishes a high-performance communication between components in a noisy and interference-prone environment.

According to one aspect of the invention, this object is achieved with a communication system as defined in claim 1.

Such a system comprises: a first component provided with a communication unit configured to generate radio communication signals carrying information, a second component configured to receive the radio communication signals, and a hollow transmission device, which is shaped to allow wireless transmission of the radio communication signals between the first and second components. The system is characterized in that the first component is configured to set priorities of at least two levels to the information to be carried by the radio communication signals, the communication unit is configured to generate radio communication signals on at least two separate radio channels and to select which radio channel to be used in dependence on the priority level of the information to be carried by the signal, and the second component is configured to receive the radio communication signals on at least two separate radio channels and to prioritize the handling of the information based on which channel the information was received on.

According to the invention, the solution to the above-described problem with heavy communication-load is to split the data communication traffic into two or more separate radio channels, where the information based on their priority are transmitted in designated radio channels. The introduction of a plurality of radio channels increases the communication capacity. Each radio channel is designated to transmit information of a certain priority level. As high-priority information and low-priority information are transmitted on separate radio channels, the high-priority traffic is no longer disturbed by low-priority data streams. In this manner, a fast and reliable transmission of high-priority data can be assured. Further, the invention makes it easier to handle the prioritarization of various information and the handling of the received information is facilitated, for example, the receiving component does not need to sort the received data due to their priorities. Moreover, routers and switches further up in the system hierarchy can easily prioritize data as it is received from the communication units.

The receiving component is adapted to prioritize the handling of the information based on which channel the information was received on. For example, the receiving component always handles the information received on the channel with highest priority before it handles information received on a channel with lower priority.

The components can be various types of internal components communicating with each other on an internal network, such as computers, electrical switchboards, circuit breakers, disconnectors, and various types of measuring devices. Alternatively, one of the components can be a router or a switch providing communication between the internal components and one or more external components via an external communication link. The hollow transmission device is a so-called waveguide.

The radio channels are separated by time division, frequency division, or code division, or any combination thereof. This means that the radio signals on the separate channels differ in time, frequency, or code. In order to avoid interference between the channels, the radio channels must be non-overlapping. The communication unit comprises a radio transmitter configured to generate radio communication signals on at least two separate radio channels.

According to an embodiment of the invention, the second component is a switching device configured to transmit the information carried by the radio communication signal to an external communication link with regard to which radio channel the information was received on. This embodiment makes it possible to provide communication between one or more internal components and one or more external components via an external communication link.

According to an embodiment of the invention, the switching device is configured to transmit the information carried by the radio communication signals to the external communication link in an order that depends on which radio channel received the information. The switching device is instructed to send the information on the external communication link in an order that depends on the priority of the data. For example, if information is waiting to be forwarded to the external communication link, information received on a channel with a higher priority is always sent before information received on a channel with a lower priority. This embodiment facilitates the priority processing of the received information and accordingly speeds up the forwarding of the received information.

According to an embodiment of the invention, the switching device is adapted to receive information of at least two priority levels from the external communication link, and the switching device comprises a communication unit configured to generate radio communication signals carrying information on at least two separate radio channels, and to select which radio channel to be used in dependence on the priority level of the information to be carried by the signal, and said internal component is configured to receive radio communication signals on at least two separate radio channels and to prioritize the handling of the information based on which channel the information was received on. This embodiment enables a two-way communication between the internal component and the external communication link.

According to an embodiment of the invention, the system comprises a plurality of components connected to the transmission device for communicating with each other, each of the components comprising a communication unit configured to generate radio communication signals carrying information on at least two separate radio channels, and to select which radio channel to be used in dependence on the priority level of the information to be carried by the signal, and each of the components is configured to receive radio communication signals on at least two separate radio channels and to prioritize the handling of the information based on which channel the information was received on. This embodiment makes it possible for a plurality of internal components to communicate with each other on an internal network. Each communication unit, for example, comprises a transceiver configured to transmit as well as to receive radio signals on separate radio channels.

According to an embodiment of the invention, the component is configured to set priorities of at least three levels to the information to be carried by the radio communication signals, said communication unit being configured to generate radio communication signals on at least three separate channels. The introduction of at least three radio channels makes it possible to send information of at least three priority levels on different channels, and thereby ensure that important information is received within an acceptable time limit. Further, the introduction of more radio channels may increase the communication capacity.

According to another aspect of the invention, this object is achieved by a substation comprising a communication system as previously specified.

According to a further aspect of the invention, this object is achieved by a method for communication between at least two components, wherein the components communicate with each other by means of radio communication signals carrying information sent via a hollow transmission device, as defined in claim 10.

Such a method comprises assigning a priority level to each information to be carried by the radio communication signal, selecting on which one of at least two separate radio channels the information is to be sent based on the priority level assigned to the information, generating a radio communication signal comprising the information on the selected radio channel, receiving the radio communication signal and noting on which radio channel the information was received, and prioritizing the handling of the received information based on which channel the information was received on.

Further developments of the method are characterized by the features of the additional claims.

### BRIEF DESCRIPTION OF THE DRAWINGS

The invention will now be explained more closely by the description of different embodiments of the invention and with reference to the appended figures.
- Fig. 1: shows a communication system according to a first embodiment of the invention.
- Fig. 2: shows a communication system according to a second embodiment of the invention.
- Fig. 3: shows a part of a substation including a communication system according to the invention.

### DETAILED DESCRIPTION OF PREFERRED EMBODIMENTS OF THE INVENTION

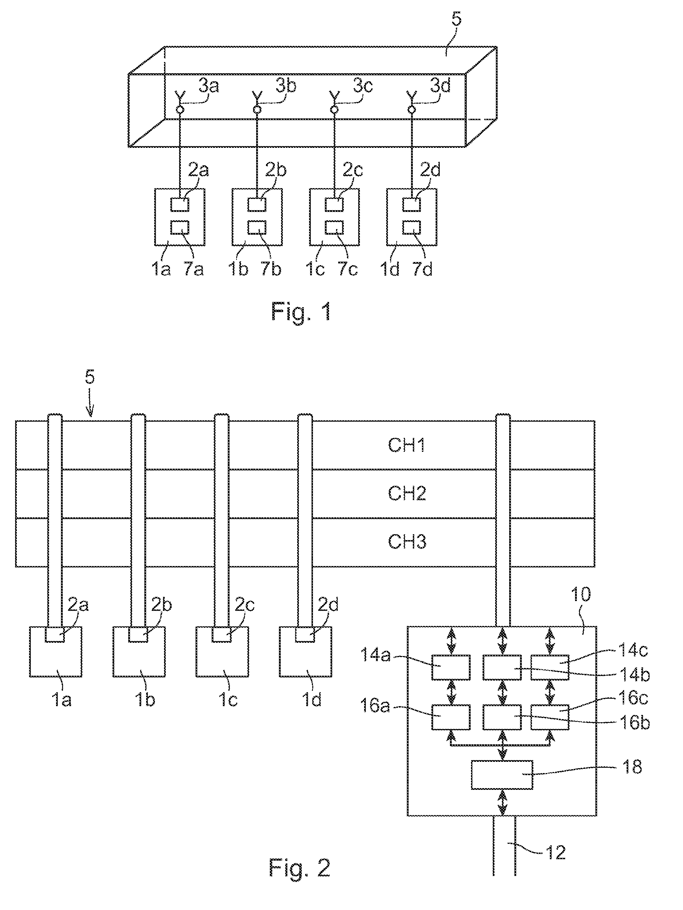

Figure 1 shows a communication system according to a first embodiment of the invention. The system comprises a plurality of components 1a-d, each provided with a communication unit configured to generate radio communication signals carrying information, for communicating the information between the components. The components 1a-d make nodes in an internal communication network. The communication in the network is, for example, based on an Ethernet based standard IEC 61850. The communication units include communication modules 2a-d configured to modulate a signal carrying information onto a radio frequency wave, or demodulate a signal carrying information from a radio frequency wave, such as transceiver, transmitter, and receiver devices. The radio frequency wave preferably has a frequency in the interval 0.1 - 70GHz, more preferably in the interval 1 - 20GHz, and most preferably in the interval 2 - 10GHz. Further, each communication unit comprises an antenna 3a-d for transmitting and/or receiving radio frequency waves connected to the communication module.

The system further comprises a signal transmission device 5 in the form of a waveguide for transmitting radio frequency waves between the components 1a-d. The waveguide connects the antennas of the transceiver devices and allows the components to communicate with each other. Typically, the waveguide has a tubular shape with a rectangular profile. One side of the waveguide is provided with openings for connecting the antennas of the transceiver devices. The waveguide 5 encloses the antennas 3a-d, and shields the transmitted radio signals against interference with the surrounding. Any electromagnetic shielding material can be chosen for the waveguide, for example aluminum or copper. The dimension of the waveguide depends on the frequency of the radio communication signals.

Each communication module 2a-d is configured to generate radio communication signals on at least two separate radio channels, preferably, of at least three separate radio channels. For example, the communication modules are configured to generate radio frequency waves of at least two non-overlapping radio frequency bands. Alternatively, the communication modules are configured to generate radio frequency waves separated in time. Alternatively, the communication modules are configured to generate radio frequency waves separated in code. The number of channels depends on the number of desired priority levels. More channels make it easier to prioritize the communication.

Each communication module 2a-d is configured to select which radio channel to be used in dependence on the priority level of the information to be carried by the signal. For example, the information is sent as data packages, and the radio wave is modulated based on the information of the data package. Each component includes a priority assign unit 7a-d adapted to assign priorities to each piece of information, i.e. to each data package, to be transmitted to any of the other components. Different types of information are assigned different priority levels. Low-priority type of information is, for example, SCADA (Supervisory, Control And Data Acquisition) information, and high-priority type of information are, for example, sample values from sensors and error messages.

The number of radio channels used depends on the required number of priority levels. For example, if the system is configured to send information on two separate radio channels, one radio channel transmits information of high priority and the other radio channel transmits information of low priority. Accordingly, two priority levels are needed: a high-priority level and a low-priority level. For example, if the channels are separated in frequency, high-priority information is carried by a radio wave of a first frequency band, and low-priority information is carried by a radio wave of a second frequency band. Preferably, the number of radio channels is three or more. As each channel is dedicated to transmit data of a certain priority level, each data package to be transmitted must be assigned a priority level.

The communication modules 2a-d are configured to receive radio communication signals on at least two separate radio channels and to prioritize the handling of the received information based on which channel the information was received on. Thus, if the information was received on a high-priority channel the information is treated with high priority, and if the information was received on a low-priority channel the information is treated with a lower priority.

Figure 2 shows a second embodiment of a communication system according to the invention. Elements corresponding to the ones of the first embodiment, shown in figure 1, are given the same reference numbers as the corresponding elements of that embodiment. In the second embodiment, the components 1a-d are configured to communicate with a switching device 10 on three separate radio channels CH1, CH2 and CH3. Accordingly, the priority assign units 7a-d are configured to assign priorities of three different levels to the information to be transmitted. The priority levels are high, medium, and low priority. On which one of the channels the information is transmitted depends on the priority level of the information. For example, channel CH1 is dedicated to transmit high-priority information, channel CH2 is dedicated to transmit medium-priority information, and channel CH3 is dedicated to transmit low-priority information.

The components 1a-d and the switching device 10 are connected to the waveguide 5, which is configured to transmit radio communication signals between the components and the switching device. The switching device 10 forms a node in the internal network. The switching device is, for example, a switch or a router. The switching device is also connected to an external communication link 12, and is configured to receive information from the components 1a-d and to transmit the received information to the external communication link with regard to on which radio channel the information was received. For example, the switching device transmits the information to the external communication link in an order that depends on which radio channel received the information.

The switching device 10 comprises a communication unit including three communication modules 14a-c, each adapted to receive radio communication signals of a separate radio channel, and three antennas (not shown in the figure) connected to the communication modules 14a-c and arranged in the waveguide. Alternatively, the switching device may comprise one communication module and one antenna adapted to receive radio communication signals of three separate radio channels. The communication modules 14a-c are connected to three buffers 16a-c. Each buffer 16a-c is configured to store information received on one of the radio channels. For example, the first buffer 16a is configured to store information received on the high-priority channel CH1, the second buffer 16b is configured to store information received on the medium-priority channel CH2, and the third buffer 16c is configured to store information received on the low-priority channel CH3. The switching device 10 further comprises a data-handling unit 18 adapted to select which information to be sent to the external communication link 12 and the order in which the information is to be sent.

The data-handling unit 18 can be configured to handle the data in many different ways. For example, the data handling unit 18 can be adapted to continuously check if there is any high-priority information in the first buffer 16a, and as long as there is information stored in the first buffer this information is transmitted via the external communication link. When the buffer 16a is empty, the data handling unit checks if there is any medium-priority information stored in the second buffer 16b, and if so the medium-priority information is transmitted via the external communication link. Thereafter, data handling unit 18 checks if any new information has arrived at the first buffer and, if so, this information is transmitted to the external data link. When the first buffer 16a and the second buffer 16b are both empty, low-priority information from the third buffer 16c is transmitted via the external communication link. Accordingly, the data handling unit 18 transmits the information to the external communication link in dependence on the priority of the channel on which the information was received.

For example, if each component 1a-c transmits three data packages including information on three different priority levels: DATA_x_CH1...DATA_x_CH3 simultaneously on the three channels, where x is the letter of the component and the last digit denotes the used radio channel, which depends on the priority level assigned to the information, the order of the data packages at the external communication link would be (first to last): DATA_a_CH1 DATA_b_CH1 DATA_c_CH1 DATA_a_CH2 DATA_b_CH2 DATA_c_CH2 DATA_a_CH3 DATA_b_CH3 DATA_c_CH3. Accordingly, the information is sent in as a sequence and the order of the data in the sequence is determined by the channel on which the data was received. Data received on the high-priority channel CH1 is transmitted before data received on the medium-priority channel CH2 and the low-priority channel CH3. Data received on low-priority channel CH3 are sent last in the sequence.

In the same way, it is possible to send information received from the external communication link 12 to the internal components 1a-d via the channels CH1,CH2,CH3 in dependence on priorities set to the information. Thus, the communication between the external link and the internal components is a two-way communication. The switching device 10 is configured to receive information with different priority levels from the external communication link 12. In dependence on the priority level, the information is transmitted on one of the channels CH1, CH2 and CH3. The components 1a-1d are configured to receive information on the three channels and to prioritize the handling of the received information based on which channel the information was received on.

Further, the components 1a-1d are enabled to communicate with each other via the channels CH1, CH2 and CH3. Alternatively, the components 1a-d communicate with each other via the switching device 10. Preferably, all communication between the components is two-way communication.

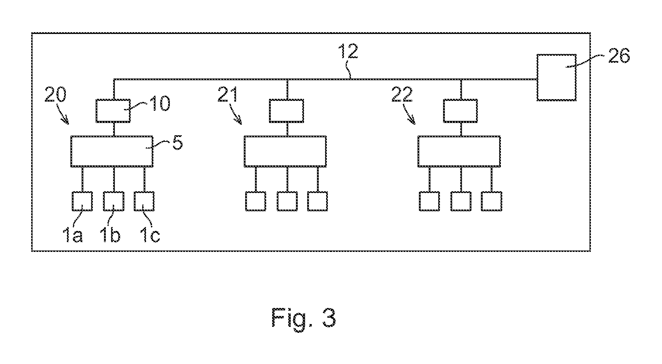

Figure 3 shows a possible embodiment of a part of a substation including a communication system according to the invention. Elements corresponding to the ones of the first and second embodiment, shown in figure 1 and 2, are given the same reference numbers as the corresponding elements of those embodiments. The substation comprises three switchboards 20, 21, 22 connected to each other via an external communication link 12. Each switchboard 20 comprises a communication system of the type described above with reference to figures 1 and 2. Each switchboard 20 includes a plurality of internal components 1a-c and a switching device 10, all of which constitute nodes in an internal network. The components are, for example, circuit breakers, intelligent electronic devices, and various types of measuring devices, sensors, and instrument transformers.

The components and the switching device are connected to a waveguide 5. The internal network of each switchboard is connected to the external network 12 via the switching device 10. The communication system of each switchboard is the same as described in relation to figure 1 and 2. The substation also comprises a substation control unit 26 connected to the external communication link 12. The substation control unit is adapted to receive information from the switchboards 20,21,22 and to monitor and control the switchboards based on the received information. The substation control unit is adapted to send information, such as control commands, to the components of the switchboards via the external link 12.

The present invention is not limited to the embodiments disclosed but may be varied and modified within the scope of the following claims. For example, the number of channels can be more than three. If the communication load in the system is heavy, it is advantageous to use 5-8 separate channels. It is possible to use one channel for non-prioritized data, and the other channels for prioritized data. It is also possible have more priority levels than channels, and to send information of two or more priority levels at the same channel.

## Claims

1. A system for communication between at least two components (1a-d,10), wherein the system comprises: a first component provided with a communication unit (2a-d,3a-d,14a-c) configured to generate radio communication signals carrying information, a second component configured to receive the radio communication signals, and a hollow transmission device (5), which is shaped to allow wireless transmitting of said radio communication signals between the first and second components, **characterized in that** the first component is configured to set priorities of at least two levels to the information to be carried by the radio communication signals, said communication unit is configured to generate radio communication signals on at least two separate radio channels (CH1,CH2,CH3) and to select which radio channel to be used in dependence on the priority level of the information to be carried by the signal, and said second component is configured to receive the radio communication signals on at least two separate radio channels and to prioritize the handling of the information based on which channel the information was received on.

2. The communication system according to claim 1, wherein the second component is a switching device (10) configured to transmit the information carried by the radio communication signal to an external communication link with regard to on which radio channel the information was received.

3. The communication system according to claim 2, wherein the switching device (10) is configured to transmit the information carried by the radio communication signals to the external communication link in an order that depends on which radio channel received the information.

4. The communication system according to claim 2 or 3, wherein the switching device (10) is adapted to receive information of at least two priority levels from the external communication link, and the switching device comprises a communication unit (14a-b) configured to generate radio communication signals carrying information on at least two separate radio channels, and to select which radio channel to be used in dependence on the priority level of the information to be carried by the signal, and said internal component is configured to receive radio communication signals on at least two separate radio channels and to prioritize the handling of the information based on which channel the information was received on.

5. The communication system according to any of the previous claims, wherein the system comprises a plurality of components connected to the transmission device (5) for communicating with each other, each of the components comprising a communication unit (2a-d,3a-d,14a-d) configured to generate radio communication signals carrying information on at least two separate radio channels, and to select which radio channel to be used in dependence on the priority level of the information to be carried by the signal, and each of the components is configured to receive radio communication signals on at least two separate radio channels and to prioritize the handling of the information based on which channel the information was received on.

6. The communication system according to any of the previous claims, wherein the radio channels are separated by time division, frequency division, code division, or any combination thereof.

7. The communication system according to any of the previous claims, wherein the components are configured to set priorities of at least three levels to the information to be carried by the radio communication signals, said communication unit (2a-d,3a-d,14a-c) being configured to generate radio communication signals on at least three separate channels (CH1,CH2,CH3).

8. A medium-voltage substation, **characterized in that** it comprises a communication system according to any of the claims 1-7.

9. Use of a communication system according to any of the claims 1-7 for communication between components in a substation.

10. A method for communication between at least two components (1a-d,10), wherein the components communicates with each other by means of radio communication signals carrying information sent via a hollow transmission device, which is shaped to allow wireless transmitting of said radio communication signals between the first and second components, **characterized in that** the method comprises:
assigning a priority level to each information to be carried by the radio communication signal,
selecting on which one of at least two separate radio channels the information is to be sent based on the priority level assigned to the information,
generating a radio communication signal comprising the information on the selected radio channel,
receiving the radio communication signal and noting on which radio channel the information was received, and
prioritizing the handling of the received information based on which channel the information was received on.

11. The method according to claim 10, wherein the method comprises transmitting information from at least one internal component on at least two separate radio channels to an external communication link with regard to on which radio channel the information was transmitted.

12. The method according to claim 11, wherein the method comprises transmitting the received information to the external communication link in an order that depends on which radio channel received the information.

13. The method according to claim 11 or 12, wherein the method comprises transmitting information from an external communication link to at least one internal component on one of at least two separate radio channels, and which one of the radio channels the information is sent on depends on the priority level of the information.

14. The method according to any of claims 10 - 13, wherein the method comprises transmitting information on at least two separate radio channels between two internal components connected to the transmission device.

15. The method according to claim 13, wherein the method comprises transmitting information on at least two separate radio channels between at least one internal component and a switching device connected to the transmission device, and transmitting information on at least two separate radio channels between two internal components connected to the transmission device, and the information is sent via said switching device.

16. The method according to any of the previous claims, wherein the radio channels are separated by time division, frequency division, code division, or any combination thereof.

17. The method according to any of the previous claims, wherein the information are assigned priorities of at least three levels and said radio communication signals are generated on at least three separate channels in dependence on the priority level of the information carried by the signal.
